# EUROPÄISCHE PATENTSCHRIFT

(11) **EP 4 120 875 B1**
(45) Veröffentlichungstag und Bekanntmachung des Hinweises auf die Patenterteilung: **26.11.2025**
(21) Anmeldenummer: 21714830.3
(22) Anmeldetag: 19.03.2021
(51) Int. Cl.: A47G 19/22, B65D 47/20

(54) **VERSCHLUSS**
CLOSURE
FERMETURE

(30) Priorität: 19.03.2020 CH 3272020
(43) Veröffentlichungstag der Anmeldung: 25.01.2023
(73) Patentinhaber: Irisgo AG, 6048 Horw (CH)
(72) Erfinder: CHRISTMANN, Fabian, 4460 Gelterkinden (CH); BORER, Manuel Laurice, 4442 Diepflingen (CH); FÄSSLER, Daniel Christian, 6438 Ibach (CH); FEUSI, Oliver Philippe, 3885 Brienz (CH)
(74) Vertreter: Rentsch Partner AG
(86) Internationale Anmeldenummer: PCT/EP2021/057059
(87) Internationale Veröffentlichungsnummer: WO 2021/186018

(56) Entgegenhaltungen:
- WO-A1-2008/041341
- WO-A1-2013/136253
- TW-U- M 586 247
- US-A1- 2005 082 248
- US-A1- 2015 034 650
- US-A1- 2016 207 672

## Beschreibung

Die vorliegende Erfindung liegt auf dem Gebiet der Verschlüsse für ein Gefäss, insbesondere für ein Gefäss für Flüssigkeiten.

Aus dem Stand der Technik sind verschiedene Verschlüsse bekannt. Eine Vielzahl dieser Verschlüsse sind Einwegverschlüsse, welche nach z.B. dem Konsum eines Getränks oder dem Verbrauch einer anderen Flüssigkeit entsorgt werden können. Des Weiteren existieren Verschlüsse, welche für den wiederholten Gebrauch dienen.

Ein Beispiel eines bekannten Verschlusses für den wiederholten Gebrauch ist die EP2825478A1**,** veröffentlicht am 21.1.2015 im Namen von Neolid. Diese offenbart einen Behälter für Lebensmittel mit einem drehend beweglichen Ring. Der Ring kann zwischen einer Freigabestellung einer Behälteröffnung und einer Verschlussstellung dieser Behälteröffnung bewegt werden. Eine Membran aus einem elastischen Material, die zum einen mit dem Behälter und zum anderen mit dem Ring verbunden ist, kann durch Drehen des Rings zwischen der Freigabe- und Verschlussstellung verdrillt werden. Um ein Rückschnappen der verdrillten Membran zu verhindern, weist der Behänder einen Sporn und eine Vielzahl von Kerben auf, wobei der Sporn imstande ist in eine der Kerben einzugreifen und den Behälter in der Verschlussstellung zu sichern.

Ein Nachteil des Standes der Technik ist der verhältnismässig komplexe Aufbau, welcher schwer zu reinigen und zu montieren ist.

Weiterhin offenbaren US2005082248A1**,** US2015034650A1**,** US2016207672A1 und **TWM586247U** Verschlüsse für Trinkgefässe. US 2005/082248 A1 offenbart einen Verschluss gemäß dem Oberbegriff des Anspruchs 1.

Eine Aufgabe der Erfindung besteht darin einen mechanisch stabilen Verschluss für ein Gefäss bereitzustellen.

Ein Verschluss gemäss der Erfindung dient zum Öffnen und Schliessen eines Gefässes, insbesondere für Flüssigkeiten. Der Verschluss umfasst ein sich in eine Längsachse erstreckendes ringartiges Basiselement und ein mit diesem wirkverbindbares ringartiges Drehelement. Das Drehelement ist zu dem Basiselement um die Längsachse verdrehbar. Das Drehelement kann insbesondere zwischen einem geöffneten und einem geschlossenen Zustand des Verschlusses verdreht werden. Das Basiselement umfasst weiter eine erste Durchgangsöffnung und das Drehelement eine zweite Durchgangsöffnung.

Die Längsachse erstreckt sich mit Vorteil zentral durch die erste und/oder zweite Durchgangsöffnung. D.h. die erste und die zweite Durchgangsöffnung können koaxial zueinander angeordnet sein. Das Basiselement kann separat ausgestaltet sein und mit dem Gefäss wirkverbindbar sein. Für eine gute Handhabung kann das Basiselement in Richtung der Längsachse innerhalb einer Kontur des Gefässes angeordnet sein. Ebenfalls möglich ist, dass das Basiselement integral mit dem Gefäss ausgestaltet ist. In diesem Fall ist das Basiselement als ein Bereich des Gefässes zu verstehen, welcher in der Nähe und um eine Gefässöffnung herum angeordnet ist.

Zum Öffnen und Schliessen des Verschlusses umfasst dieser mindestens ein Schliesselement mit einem ersten und einem zweiten Ende. Das Schliesselement ist hierbei mit dem ersten Ende mit dem Basiselement und mit dem zweiten Ende mit dem Drehelement wirkverbunden. Von dem mindestens einen Schliesselement wird eine Verschlussöffnung des Verschlusses definiert, wie später in mehr Detail beschrieben. Durch eine Verschiebung des zweiten Endes in Relation zu dem ersten Ende (hervorgerufen durch die Verdrehung des Drehelementes zu dem Basiselement) wird die Verschlussöffnung radial zusammengezogen oder geöffnet. Zwischen dem ersten und dem zweiten Ende des Schliesselementes ist ein beweglicher Bereich des Schliesselementes angeordnet, respektive der bewegliche Bereich wird von dem ersten und dem zweiten Ende begrenzt. Der bewegliche Bereich ist innerhalb, insbesondere vollständig innerhalb, der ersten und/oder der zweiten Durchgangsöffnung angeordnet, sodass das Schliesselement im Inneren des Verschlusses angeordnet ist. Auf diese Weise ist der Verschluss mechanisch stabiler und das Schliesselement besser vor äusseren Einflüssen geschützt.

Wenn das Drehelement zu dem Basiselement zwischen dem geöffneten und dem geschlossenen Zustand verdreht wird verändert sich der Querschnitt der Verschlussöffnung. Beispielsweise kann das Schliesselement die Verschlussöffnung in einer ersten Drehrichtung des Drehelementes zu dem Basiselement zuziehen (Verkleinerung des Querschnitts der Verschlussöffnung) und in einer entgegengesetzten zweiten Drehrichtung wieder öffnen (Vergrösserung des Querschnitts der Verschlussöffnung). Bei einer ausreichenden Verdrehung des Drehelementes zu dem Basiselement kann man den verschlossenen Zustand des Verschlusses, respektive der Verschlussöffnung, erreichen (bei der der Querschnitt der Verschlussöffnung null ist). Mit Vorteil ist die Verschlussöffnung verschlossen, wenn das Drehelement zu dem Basiselement mindestens 180° verdreht ist. Mit Vorteil ist die verschlossene Verschlussöffnung flüssigkeitsdicht, verschlossen.

In dem geschlossenen Zustand der Verschlussöffnung ist das Drehelement selbsthemmend gegen das Basiselement gehalten. Unter selbsthemmend wird verstanden, dass das Drehelement und das Basiselement durch einen durch Reibung verursachten Widerstand von einem Zurückdrehen, respektive Zurückschnappen, gesichert werden. D.h. eine Rückstellkraft, welche entgegengesetzt der Verdrehung auf das Drehelement wirkt, ist kleiner als der durch die Reibung verursachte Widerstand zwischen dem Drehelement und dem Basiselement. Aufgrund der Selbsthemmung kann auf eine Sperrvorrichtung und/oder einen Formschluss verzichtet werden, was die Mechanik des Verschlusses deutlich vereinfacht und den Verschleiss und die Lebensdauer des Verschlusses erhöht. Die durch das verdrehte Schliesselement verursachte Rückstellkraft nimmt bei über 180° Verdrehung von dem Drehelement zu dem Basiselement ab, sodass der Verschluss bei einer Verdrehung über 180° am besten hält. D.h. in dem geschlossenen Zustand des Verschlusses ist das Drehelement daher mit Vorteil gegen das Basiselement über 180° verdreht.

Das Drehelement ist gegenüber dem Basiselement ergänzend in Richtung der Längsachse verschiebbar angeordnet. Mit Vorteil ist das Drehelement hierbei in dem geöffneten Zustand des Verschlusses weiter von dem Basiselement beabstandet als in dem geschlossenen Zustand. D.h. das erste und das zweite Ende des Schliesselements sind in dem geöffneten Zustand des Verschlusses in Richtung der Längsachse weiter voneinander beabstandet als in dem geschlossenen Zustand. Diese Verschiebung wird durch Führungsmittel unterstützt. Das Drehelement weist hierzu erste Führungsmittel und/oder das Basiselement zweite Führungsmittel zum Führen des Drehelementes in Richtung der Längsachse auf. Das erste Führungsmittel kann z.B. ein in der zweiten Durchführöffnung des Drehelementes verlaufendes Gewinde sein. In dem ersten Führungsmittel kann das zweite Führungsmittel (z.B. in Form von einem Nutenstein, einem weiteren Gewinde o.ä.) geführt werden. Das zweite Führungsmittel ist mit Vorteil an einer Aussenseite des Basiselements angeordnet. Für eine einfache Handhabung des Verschlusses kann das zweite Führungsmittel zudem mindestens einen Anschlag für das erste Führungsmittel in Richtung der Längsachse aufweisen. Mit Vorteil sind jedoch in Richtung der Längsachse zwei Anschläge vorhanden, zwischen welchen das erste Führungsmittel angeordnet ist. Die Anschläge können verhindern, dass das Drehelement beim Verdrehen in die axiale Richtung von dem Basiselement lösbar ist. Weiterhin kann das zweite Führungsmittel an dem mindestens einem Anschlag in einer Endposition zusätzlich fixierbar sein. Beispielsweise kann das zweite Führungsmittel zwischen dem Anschlag und dem ersten Führungsmittel verklemmbar sein.

Je nach Anwendung des Verschlusses kann dieser ein ringartiges Mundstück umfassen, an welchem ein Benutzer eine Flüssigkeit aus dem Gefäss leicht trinken kann. Ein Mundstück hat den Vorteil, dass der Benutzer keinen Kontakt mit der Membran hat. Das Mundstück kann zumindest bereichsweise eine flüssigkeitsabweisende Beschichtung aufweisen. Das Mundstück kann mit dem Drehelement oder dem Basiselement wirkverbunden sein. In einem montierten Zustand des Mundstücks kann das Drehelement radial innerhalb des Mundstücks angeordnet sein. Alternativ kann das Mundstück integral mit dem Basiselement und/oder dem Gefäss ausgestaltet sein. Für eine gute Handhabung kann das Mundstück in Richtung der Längsachse innerhalb einer Kontur des Gefässes angeordnet sein.

Das Schliesselement ist eine Membran. Die Membran erstreckt sich mit Vorteil röhrenförmig von einem ersten zu einem zweiten Ende in Richtung der Längsachse. Der von dem ersten und dem zweiten Ende begrenzte bewegbare Bereich der Membran kann durch die Drehbewegung des Drehelements (elastisch) verdrillt werden. In dem Fall, dass das Schliesselement eine Membran ist, wird die Verschlussöffnung durch diese definiert. D.h. die Membran, insbesondere der bewegbare Bereich der Membran, bildet die Verschlussöffnung in Richtung der Längsachse aus. Die Verschlussöffnung erstreckt sich in Richtung der Längsachse und kann **in** radialer Richtung von einer Membraninnenseite begrenzt sein. Die jeweiligen Enden der Membran dienen zur Befestigung der Membran. Das erste und zweite Ende können jeweils ringartig ausgestaltete Bereiche der Membran sein. Das erste und/oder zweite Ende kann kraft- und/oder formschlüssig mit dem Basiselement und/oder dem Drehelement verbunden sein. Mit Vorteil ist diese Verbindung flüssigkeitsdicht. Zur Befestigung der Membran kann mindestens ein Pressring vorhanden sein. Das erste Ende kann so zwischen dem Drehelement und dem Pressring gehalten werden. Alternativ oder Ergänzend kann ebenfalls das zweite Ende zwischen dem Basiselement und einem weiteren Pressring gehalten werden. Ebenfalls denkbar ist z.B. ein Einklemmen des zweiten Endes der Membran zwischen dem Drehelement und einem mit diesem wirkverbundenen Mundstück. Das erste und/oder das zweite Ende der Membran kann ergänzend eine Verdickung aufweisen. Mit Vorteil ist die Verdickung ringförmig. Die Verdickung kann beispielsweise einen runden Querschnitt haben. Die Verdickung kann einerseits dazu dienen die Enden besser befestigen zu können. Alternativ oder ergänzend kann die Verdickung als Dichtung dienen.

Die Membran ist mit Vorteil elastisch deformierbar. Mit Vorteil ist die Membran in dem geöffneten Zustand des Verschlusses in Richtung der Längsachse vorgespannt, d.h. elastisch deformiert, montiert. In diesem gespannten Zustand der Membran und dem geöffneten Zustand des Verschlusses wird die Membran so glattgezogen und wirft keine Falten. Somit wird eine grosse Verschlussöffnung mit einer glatten Innenwandung gebildet. Durch die oben beschriebene axiale Verschiebung des Drehelements zu dem Basiselement kann diese Vorspannung zum Schliessen des Verschlusses aufgehoben werden, wenn das Drehelement in dem geschlossenen Zustand des Verschlusses weniger zu dem Basiselement beabstandet ist als in dem (vorgespannten) geöffneten Zustand. D.h. die Länge des bewegbaren (verdrillbaren) Bereiches der Membran in die axiale Richtung verringert sich beim Verdrehen des Drehelements von dem geöffneten Zustand in den geschlossenen Zustand des Verschlusses. Bei einer Ausführung des ersten Führungsmittels als Gewinde kann die axiale Verschiebung des Drehelements zu dem Basiselement beim Verschliessen durch die Gewindesteigung erreicht werden. Für eine gute Handhabung in Bezug auf die aufzuwendende Kraft um den Verschluss zu schliessen kann ein Verhältnis von L/D = 0.3 - 0.7, insbesondere L/D = 0.45-0.55, gewählt werden. Hierbei ist L die Länge des bewegbaren (verdrillbaren) Bereiches der Membran in dem geöffneten Zustand des Verschlusses in Richtung der Längsachse und D der Durchmesser des (nicht verdrillten) bewegbaren Bereiches der Membran in dem geöffneten Zustand. Als Material für die Membran eignen sich alle Elastomere. Insbesondere Verbindungen von Kautschuk, Latex, aber auch Butyl, Polyurethan, Polyisopren oder Polyhydroxybutyrat (PHB). Diese Listen sind nicht abschliessend. Besonders vorteilhaft ist jedoch Silikon. Für einen leichten Gebrauch, kann es vorteilhaft sein, wenn die Membran auf mindestens einer Seite eine Anti-Haft Beschichtung aufweist. Alternativ oder in Ergänzung kann die Membran auf mindestens einer Seite eine thermisch isolierende Beschichtung aufweisen.

Je nach Ausgestaltung des Verschlusses kann dieser mindestens einen Lüftungskanal für einen Druckausgleich eines Membranzwischenraumes aufweisen. Der Membranzwischenraum ist hierbei zwischen der Membran und dem Drehelement und/oder zwischen der Membran und dem Basiselement angeordnet. In einem verdrehten Zustand des Drehelementes zu dem Basiselement wird das Volumen des Membranzwischenraums in der Regel vergrössert, was einen Druckabfall in dem Membranzwischenraum hervorrufen kann. Der Druckabfall kann dazu führen, dass die Membran sich derart verformt, dass diese aneinanderhaftet und ein Schliessen des Verschlusses erschwert wird. Um diesen Effekt zu umgehen kann der Verschluss mindestens einen Lüftungskanal aufweisen, welcher den Membranzwischenraum mit der Umgebung des Verschlusses derart verbindet, dass ein Druckausgleich möglich ist. Der (mindestens eine) Lüftungskanal kann sich von einer ersten Mündung an einer Aussenseite des Verschlusses zu einer zweiten Mündung, welche in dem Membranzwischenraum angeordnet ist, erstrecken. Mit Vorteil erstreckt sich der Lüftungskanal zwischen dem Basiselement und dem Drehelement. Der Lüftungskanal kann z.B. als ein Spalt zwischen dem Basiselement und dem Drehelement ausgestaltet sein. Wenn Führungsmittel vorhanden sind, wie z.B. ein Gewinde wie oben beschrieben, können die ersten und/oder die zweiten Führungsmittel über den Umfang von dem mindestens einem Lüftungskanal unterbrochen sein.

In einer weiteren möglichen Ausführungsform umfasst der Verschluss mindestens ein Schliesselement in Form von einer Schnur. Gute Resultate können mit drei Schnüren erzeugt werden. Die mindestens eine Schnur kann mit einem ersten Ende an einem Basiselement und mit einem zweiten Ende an dem Drehelement befestigt sein. Bei mehreren Schnüren sind diese mit Vorteil um die Längsachse herum gleichmässig verteilt angebracht. Die Schnüre definieren eine zwischen den Schnüren angeordnete Verschlussöffnung. D.h. durch eine Bewegung der Schnüre kann die Verschlussöffnung in ihrem Querschnitt verändert werden. Wenn lediglich eine Schnur vorhanden ist, umgibt diese die Verschlussöffnung. Durch die Drehbewegung des Drehelements, verschiebt sich das zweite Ende der mindestens einen Schnur derart, dass die Verschlussöffnung einschnürt wird und sich dessen Querschnitt verkleinert. Durch eine entsprechende Gegenbewegung kann die Verschnürung wieder gelöst werden. Bei drei Schnüren können diese anfänglich einen Drehwinkel von etwa α = 100° des Verschlusses überspannen und beim Verdrehen des Drehelementes um weitere 100° gedreht werden, sodass diese schlussendlich 200° umspannen und die Verschlussöffnung zusammenschnüren. Die Schnüre haben mit Vorteil eine hohe Abriebfestigkeit und eine Elastizität ähnlich einer Angelschnur oder geringer. Ein geeigneter E-Modul der Schnüre ist zwischen 0.01 und 4 GPa (1GPa=109 N/m2). Auch dafür sind Kunststoffe oder Kunststoffverbindungen geeignet, insbesondere Elastomere, Elasthan, Polyester, Polyamid, aber Kautschuk- oder Silikonverbindungen, Fullerene, Metalle, Wolle, Seide, Baumwolle, Kunstseide oder Viskose.

Um den Verschluss (flüssigkeitsdicht) zu verschliessen kann in dieser Ausführungsform (mit mindestens einer Schnur) eine Manschette vorgesehen sein, welche von der mindestens einen Schnur durch die Drehbewegung einschnürbar ist. Durch die entsprechende Gegenbewegung des Drehelements wird die Verschnürung der Manschette entsprechend wieder gelöst. Die Drehbewegung bewirkt, dass die Manschette radial zusammengezogen wird und schliesslich, bei ausreichender Verdrehung die Verschlussöffnung abklemmt. Die Manschette ist somit elastisch deformierbar. Die Manschette, kann mit ihrem ersten und zweiten Rand jeweils an dem Basiselement angeordnet sein. Die Manschette erstreckt sich mit Vorteil röhrenförmig von einem ersten Rand zu einem zweiten Rand in Richtung der Längsachse. Mit Vorteil ist die mindestens eine Schnur radial ausserhalb der Manschette und in Richtung der Längsachse zwischen den Rändern der Manschette angeordnet. Die röhrenförmige Manschette bildet (in der Ausführung mit Schnüren) die Verschlussöffnung in Richtung der Längsachse aus. Hierbei kann die Verschlussöffnung insbesondere durch eine Innenseite der Manschette begrenzt werden. In einem zugezogenen Zustand ist die Verschlussöffnung mit Vorteil flüssigkeitsdicht verschlossen. Die Manschette kann das gleiche Material wie die Membran ausweisen. Auch die Beschichtungen der Membran können bei der Manschette verwendet werden. Die Manschette kann in einem nicht eingeschnürten Zustand zumindest bereichsweise koaxial entlang der ersten und/oder zweiten Durchgangsöffnung angeordnet sein. Ebenfalls sorgt die Rückstellkraft der elastischen Manschette dafür, dass die mindestens eine Schnur im offenen Zustand von der Manschette nach aussen gedrückt wird und die Verschlussöffnung so wieder freigegeben wird.

Je nach Ausführungsform kann der Verschluss ein zusätzliches Bedienelement umfassen. Das Bedienelement ist mit dem Drehelement wirkverbindbar und dient dazu das Verdrehen des Drehelement zu vereinfachen. Das Bedienelement kann ringartig ausgestaltet sein. Je nach Ausführung kann das Drehelement radial innerhalb des Basiselementes (zu der Längsachse hingewandt) angeordnet sein. Das Bedienelement kann in diesem Fall über mindestens ein Wirkverbindungsmittel, wie z.B. ein Steg und/oder ein Zahnrad und/oder eine Verzahnung, durch eine Öffnung des Basiselements mit dem Drehelement wirkverbunden sein. Auf diese Weise resultiert ein Verstellen des Bedienelementes in einer Verdrehung des Drehelementes. Am Bedienelement kann auch eine senkrechte Bewegung ausgeführt werden, wenn entsprechende Umlenkungen der Wirkungskräfte vorgesehen sind. Mit Vorteil ist für jedes Wirkverbindungsmittel eine Öffnung vorhanden. Z.B. können zwei oder mehr als drei Stege in zwei oder mehr als drei Öffnungen angeordnet sein, um mehr Freiheiten bezüglich dem Drehwinkel zu haben, der sich entsprechend verändert und bis ca. 170° aufweisen kann. Die mindestens eine Öffnung kann schlitzartig ausgestaltet sein und sich zumindest bereichsweise um den Umfang des Basiselements erstrecken. Weiterhin kann das Bedienelement einen Griff umfassen.

Je nach Anwendung kann ergänzend eine Sperrvorrichtung vorgesehen sein zum Arretieren des Drehelementes und/oder des Bedienelementes in der geschlossenen Stellung. Eine solche Sperrvorrichtung kann durch einen Hebel oder Schieber, eine Klemmung, eine Feder oder eine andere gängige Vorrichtung erreicht werden. In der Materialwahl sind keine Einschränkungen gegeben, sofern die für die Funktion notwendigen Eigenschaften gewährleistet sind. Darunter zählen Robustheit, Bearbeitungsfähigkeit, und Widerstandskraft gegen die zu erwartende Beeinträchtigung durch Hitze, Kälte und Nässe.

Der Verschluss, wie oben beschrieben, kann mit einem Gefäss wirkverbunden werden. Das Gefäss weist mit Vorteil einen Boden und eine röhrenförmige Wandung auf, welche in den Boden übergeht. Die Wandung umgibt einen Füllraum des Gefässes. Die Wandung kann im Wesentlichen zylindrisch und/oder zumindest bereichsweise konisch sein. Je nach Anwendung kann das Gefäss doppelwandig, insbesondere vakuumisolierend ausgestaltet sein. Auch andere Eigenschaften des Gefässes, beispielsweise die Fähigkeit zur Wärme- und Kältespeicherung oder die Umfassung einer Isolation oder eines Henkels sind selbstverständlich und werden hier nicht weiter beschrieben. Als Material für das Gefäss bietet sich Metall, insbesondere Edelstahl an. Das Gefäss kann jedoch auch ein Verbundwerkstoff aus einer Auswahl der Materialien Naturkautschuk, Papier, Silikon, Bambus- und Hanffasern, Edelstahl, Aluminium, Holz, Glas, Kunststoff (PP, PU, PET, Polysterol, ESP, PLA), Keramik, Porzellan, Karton und Kunststein sein oder aus einzelnen dieser Materialien hergestellt sein. Wenn das Basiselement und/oder das Drehelement und/oder das Mundstück separat ausgestaltet sind können diese mit Vorteil Kunststoff, wie z.B. Polypropylen, umfassen.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante eines erfindungsgemässen Verschlusses mit einem Gefäss in einer perspektivischen Ansicht in einem geöffneten Zustand;
- Fig. 2: Die erste Variante des Verschlusses mit einem Gefäss gemäss Figur 1 in einer perspektivischen Ansicht in einem geschlossenen Zustand;
- Fig. 3: Der Verschluss mit dem Gefäss gemäss Figur 1 in einer geschnittenen Ansicht;
- Fig. 4: Der Verschluss mit dem Gefäss gemäss Figur 1 in einer auseinandergebauten Ansicht;
- Fig. 5: Eine zweite Variante eines erfindungsgemässen Verschlusses mit einem Gefäss in einer in einer geschnittenen Ansicht;
- Fig. 6: Der Verschluss mit dem Gefäss gemäss Figur 5 in einer perspektivischen teilweise geschnittenen Ansicht;
- Fig. 7: Eine dritte nicht beanspruchte Variante eines Verschlusses mit einem Gefäss;
- Fig. 8: Eine vierte nicht beanspruchte Variante eines Verschlusses mit einem Gefäss;
- Fig. 9: Eine fünfte nicht beanspruchte Variante eines Verschlusses mit einem Gefäss;
- Fig. 10: Eine sechste nicht beanspruchte Variante eines Verschlusses mit einem Gefäss;
- Fig. 11: Eine siebte nicht beanspruchte Variante eines Verschlusses mit einem Gefäss;
- Fig. 12: Eine achte nicht beanspruchte Variante eines Verschlusses mit einem Gefäss.

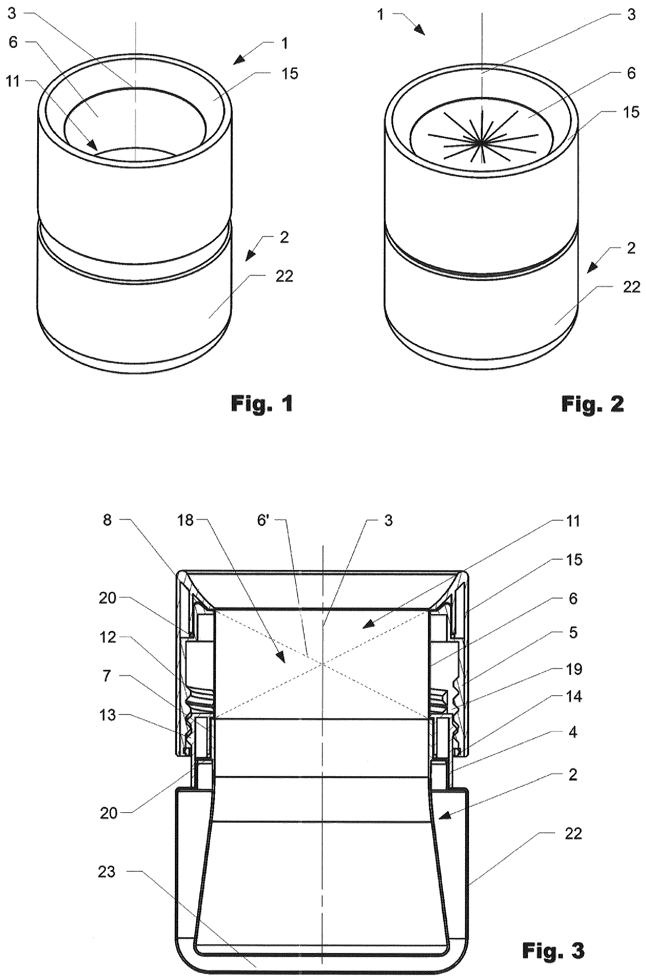

**Figur 1** bis **Figur 4** zeigt eine erste Variante eines erfindungsgemässen Verschlusses 1 mit einem Gefäss 2. Das Gefäss umfasst eine Wandung 22 und einen Boden 23. Der Verschluss 1 umfasst ein sich in eine Längsachse 3 erstreckendes ringartiges Basiselement 4 mit einer ersten Durchgangsöffnung 9, ein mit dem Basiselement 4 wirkverbundenes und zu diesem um die Längsachse 3 verdrehbares ringartiges Drehelement 5 mit einer zweiten Durchgangsöffnung 10, sowie ein Schliesselement zum Verschliessen einer Verschlussöffnung 11. Im gezeigten Beispiel ist das Schliesselement eine röhrenförmige, elastische Membran 6, welche die Verschlussöffnung 11 in Richtung der Längsachse ausbildet. In einem geschlossenen Zustand des Verschlusses 1 ist Verschlussöffnung 11 zusammengezogen (siehe **Figur 2**). In einem geöffneten Zustand erstreckt sich die Membran 6 hingegen im Wesentlichen entlang der ersten und/oder zweiten Durchgangsöffnung 9, 10, wie in **Figur 1** gezeigt.

Wie in **Figur 3** ersichtlich, ist die Membran 6 mit einem ersten Ende 7 mit dem Basiselement 4 und mit einem zweiten Ende 8 mit dem Drehelement 5 wirkverbunden. Bei einem Verdrehen des Drehelementes 5 zu dem Basiselement 4 wird ein bewegbarer Bereich der Membran 6, welcher von dem ersten und dem zweiten Ende 7, 8 begrenzt wird, entsprechend verdrillt. Im gezeigten Beispiel ist die Membran 6 mit ihrem zweiten Ende 8 zwischen dem Drehelement 5 und einem Mundstück 15 verklemmt und/oder verklebt. Das erste Ende 7 der Membran 6 ist zwischen dem Basiselement 4 und dem Gefäss 2 verklemmt und/oder verklebt. Das erste und das zweite Ende 7, 8 weisen jeweils eine Verdickung 20 mit einer dichtenden Wirkung auf. Ein Mundstück 15 ist auf das Drehelement 5 aufgesetzt und kann sich mit diesem in Relation zu dem Basiselement 4 verdrehen.

An dem Drehelement 5 sind erste Führungsmittel in Form eines zumindest bereichsweise um die zweite Durchgangsöffnung 10 umlaufenden Gewindes 12 angeordnet. Auf der Aussenseite des Basiselementes 4 sind zweite Führungsmittel 13 in Form von multiplen Nutensteinen oder einem entsprechenden Gegengewinde 13 angeordnet, welche in dem ersten Führungsmittel 12 geführt werden. Bei einer Verdrehung des Drehelements 5 zu dem Basiselement 4 von dem geöffneten Zustand in den geschlossenen Zustand wird das zweite Führungsmittel 13 in dem ersten Führungsmittel 12 geführt und das Drehelement 5 wird in Richtung der Längsachse 3 zu dem Basiselement 4 hinbewegt (siehe **Figur 1** und **Figur 2**). Gleichzeitig verringert sich die Länge des bewegbaren (verdrillbaren) Bereiches der Membran 6 in die axiale Richtung beim Verdrehen des Drehelements 5 von dem geöffneten Zustand in den geschlossenen Zustand des Verschlusses 1 und der bewegbare Bereich der Membran 6 elastisch verdrillt. Nach einer Verdrehung um mindestens 180° ist die Verschlussöffnung 11 durch die Membran 6 verschlossen. In diesem Zustand ist die Spannung der Membran 6 in Richtung der Längsachse 3 so gross, dass zwischen den ersten und zweiten Führungsmitteln 12, 13 eine Selbsthemmung entsteht, welche eine Zurückschnappen der Membran 6 verhindert.

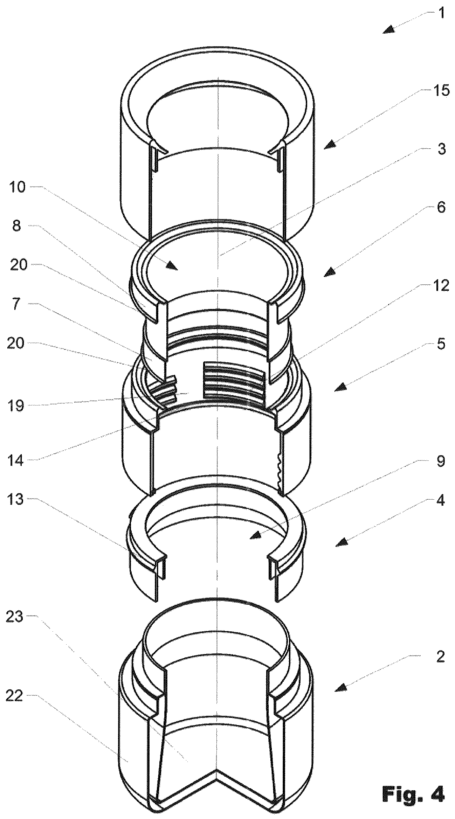

Wie in der Explosionsdarstellung in **Figur 4** ersichtlich, sind die ersten Führungsmittel 12 in Umfangsrichtung unterbrochen. Jede der Unterbrechung bildet hierbei einen Lüftungskanal 19 aus. Dieser ermöglicht einen Druckausgleich in einem Membranzwischenraum 18 zwischen der Membran 6 und dem Basiselement 4 und/oder dem Drehelement 5. In **Figur 3** ist der in seinem Volumen vergrösserte Membranzwischenraum 18 der elastisch verdrillten Membran 6' schematisch angedeutet.

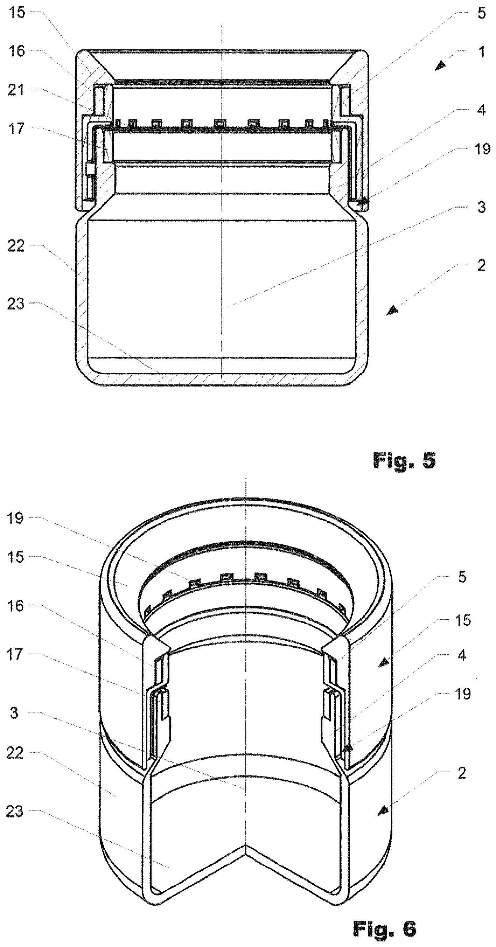

**Figur 5** und **Figur 6** zeigten eine zweite Variante eines erfindungsgemässen Verschlusses 1 mit einem Gefäss 2. Die Membran ist nicht dargestellt. Die zweite Variante unterscheidet sich von der ersten Variante dadurch, dass das Basiselement 4 integral mit dem Gefäss 2 ausgestaltet ist. Das Basiselement wird von einem (integralen) Bereich des Gefässes um eine Gefässöffnung gebildet. Ein erster Pressring 16 klemmt das zweite Ende des Schliesselementes, respektive der Membran, zwischen diesem und dem Drehelement 5 ein. Ein zweiter Pressring 17 klemmt das erste Ende der Membran zwischen diesem und dem Basiselement 4 ein. Eine Verdrehung des Drehelements 5 kann z.B. bei Anheben des Drehelements 5 in Richtung der Längsachse 3 gegen die Spannung der Membran durchgeführt werden. Auch bei dieser Variante sind Lüftungskanäle 19 für den Membranzwischenraum vorhanden. In **Figur 6** ist ersichtlich, wie sich ein Lüftungskanal 19 in Form eines Spaltes zwischen dem Basiselement 4 und dem Drehelement 5 erstreckt. Aussparungen 21 in dem Drehelement sorgen dafür, dass der Lüftungskanal 19 nicht verschlossen wird.

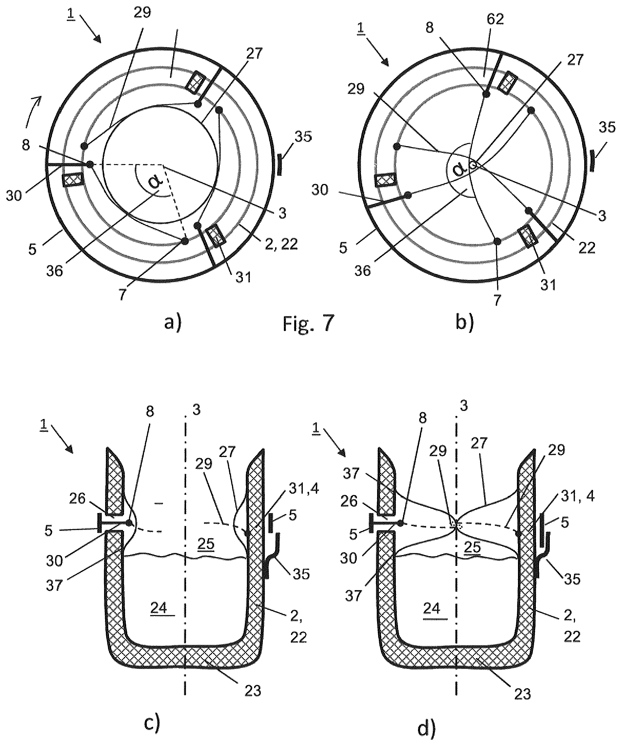

**Figur 7** bis **Figur 12** zeigen weitere Ausführungsbeispiele eines Verschlusses 1 zum Verschliessen eines Gefässes 2, mit einem Schliesselement in Form von mindestens einer Schnur 29. Die mindestens eine Schnur 29 definiert die Verschlussöffnung 11 des Verschlusses 1, welche von einer röhrenförmigen Manschette 27 ausgebildet wird. In diesen Ausführungsbeispielen ist das Basiselement und das Mundstück integral mit dem Gefäss ausgestaltet. Ebenfalls ist jedoch denkbar, dass das Basiselement und das Mundstück als separate Bauteile ausgestaltet sind.

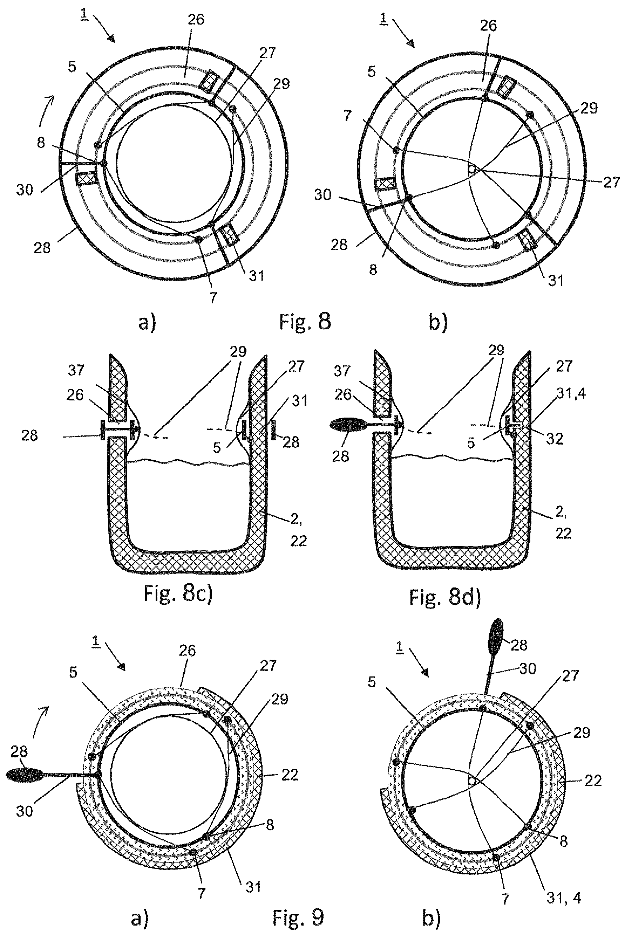

**Figur 7** und **Figur 8** zeigen Ausführungsbeispiele eines Verschlusses 1 zum Verschliessen eines Gefässes 2, jeweils im Längsschnitt und im Querschnitt. Das Gefäss 2 umfasst eine Wandung 22 und einen Boden 23, welche einen Füllraum 24 umgeben, und weist eine zentrale, senkrechte Längsachse 3 auf. Die Wandung 22 umfasst am oberen Ende im Bereich des integralen Basiselements 4, eine oder mehrere seitliche, nach aussen durchgehende Öffnungen 26. Eine Manschette 27 ist in einem Innenraum 25 des Gefässes 2 angeordnet und mit ihren Rändern 37 oberhalb und unterhalb der Öffnungen 26 dicht an der Wandung 22, respektive an dem (integralen) Basiselement 4, angebracht. Im gezeigten Fall ist die Manschette 27 (im geöffneten Zustand) im Wesentlichen konzentrisch zur Wandung 22 angeordnet. In **Figur 7** ist radial ausserhalb des Basiselementes 4 das verstellbare ringförmige Drehelement 5 angeordnet, welches zum Öffnen und Schliessen des Verschlusses 1 dient. In **Figur 8** ist das ringförmige Drehelement 5 im Innenraum des Gefässes 2 und innerhalb des Basiselementes 4 angeordnet, welches mit einem aussenliegenden Bedienelement 28 wirkverbunden ist. Das Drehelement 5 ist starr über Stege 29 durch die Öffnungen 26 mit dem Bedienelement 28 verbunden. Die Stege 29 drehen sich gleichermassen wie der Bedienelement 28, wenn dieses gedreht wird.

In beiden Ausführungsformen sind mehrere Schnüre 29 radial ausserhalb der Manschette 27 und in Richtung der Längsachse zwischen den Rändern 37 angeordnet. Die Schnüre 29 weisen je zwei Enden 7, 8 auf. Das erste Ende ist am Basiselement 4 und das zweite Ende am Drehelement 5 angebracht. D.h. die Schnüre sind derart mit dem Drehelement 5 wirkverbunden, dass durch ein Verstellen des Drehelements 5 das zweite Ende 8 in Relation zu dem ersten Ende 7 bewegt wird. Dadurch wird die die Manschette 27 radial in Richtung der Längsachse 3 hin elastisch zusammengezogen und schliesslich abgeklemmt. So wird der Füllraum 24 flüssigkeitsdicht verschlossen. In diesen Ausführungen sind drei Schnüre 29 angeordnet. Im geöffneten Zustand überspannen das erste und das zweite Enden 7, 8 jeder Schnur 29 vorzugsweise einen Winkel α von etwa 90-120° um die Längsachse 3, wobei dieser Winkel α beim Drehen des Drehelemente 5 grösser wird. Die Manschette 27 drückt die aussen an ihr angeordneten Schnüre 29 im vollkommen geöffneten Zustand durch ihre Spannkraft nach aussen. Da die Schnüre 29 dann nicht gespannt sind, lassen sie dies zu. Beim Drehen des Bedienelements 28 wandert das Drehelement 5 in diesen Beispielen im Uhrzeigersinn, wobei die andere Richtung bei entsprechendem Aufbau natürlich auch möglich ist. Je weiter das Drehelement 5 gedreht wird, desto grösser wird der Winkel α, der jede Schnur 29 um die Längsachse 3 überspannt, sodass die Schnüre 29 die Manschette 27 gegen die Längsachse 3 hindrücken, wobei die Spannkraft der Manschette 27 stets dagegenwirkt. Daher ist der Verschluss 1 noch nicht geschlossen, wenn sich das erste Ende 7 und das zweite Ende 8 jeder Schnur 29 im Gefäss 2 gegenüberliegen. Erst wenn der Winkel α grösser als 180° ist, etwa 200-220°, ist die Manschette 27 im Bereich der Längsachse 3 derart von den Schnüren 29 eingeklemmt, dass kein Tropfen mehr aus dem Füllraum 24 entweichen kann (siehe **Figur 7b** und **Figur 8b**). Der Drehwinkel 36, der ein Benutzer durch die Drehung ausführt, beträgt hier ca. 80-115°. Die Öffnungen 26 sind in diesen Ausführungen daher als drei lange, bogenförmige Schlitze von ca. 110° zu Längsachse ausgeführt, sodass innerhalb der Schlitze die Stege 30 bewegt werden können. Verbindungsbereiche 31 an der Wandung 22, respektive dem Basiselement 4, zwischen den Öffnungen 26 verbinden den oberen Bereich des Gefässes 2, der ein Mundstück 15 umfasst, mit dem restlichen Bereich des Gefässes 2, der den Boden 23 umfasst, starr.

**Figur 9** zeigt eine weitere Ausführungsform eines Verschlusses 1 an einem Gefäss 2. Bei dieser ist ein Bedienelement 28 nur durch eine einzige Öffnung 26 durch einen Steg 30 mit dem Drehelement 5 im Innenraum 25 wirkverbunden. Diese Öffnung 26 überspannt einen Winkel α von beispielsweise ca. 100- 120° zur Längsachse 3. Die Anordnung der Schnüre 29 und die Befestigung ihrer Enden 7, 8 entsprechen denen von **Figur 8****.** Da hier jedoch nur eine Öffnung 26 vorgesehen ist, ist die Abdichtung nach aussen einfacher. Das Drehelement 5 ist vorzugsweise in einer umlaufenden Nut 32 in dem Basiselement 4 geführt, um seine axiale Position stets zu halten.

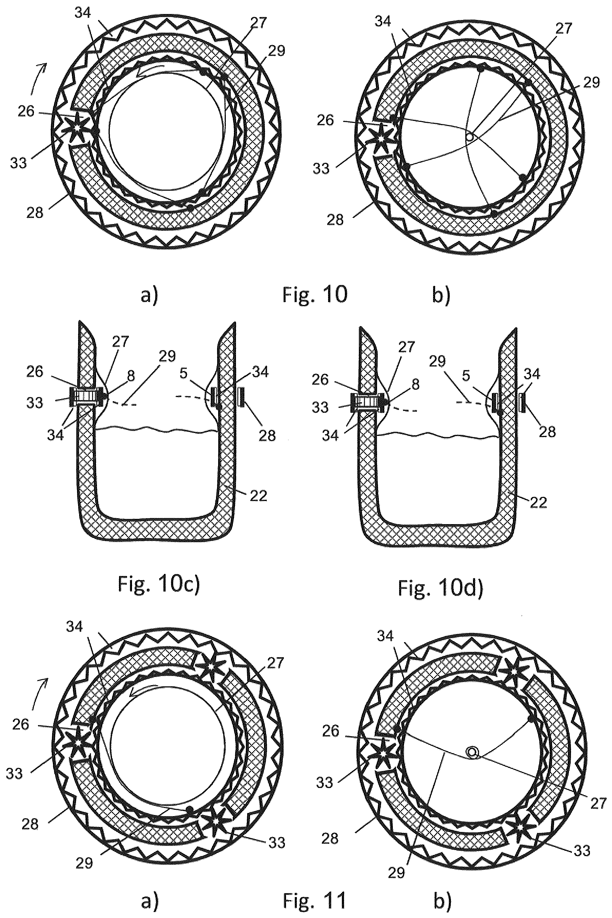

In der Ausführungsform gemäss **Figur 10** ist ebenfalls nur eine Öffnung 26 vorhanden. Diese muss nicht schlitzförmig ausgestaltet sein, sondern ist im Vergleich der bisher dargestellten Ausführungsformen kleiner. Das Bedienelement 28 ist ringförmig ausgestaltet und mit dem innenliegenden Drehelemente 5 wirkverbunden. In der Öffnung 26 ist ein Zahnrad 33 angeordnet und am ringartigen Bedienelement 28 sowie am Drehelement 5 sind Verzahnungen 34 angebracht, die in das Zahnrad 33 eingreifen, sodass ein Drehen des ringartigen Bedienelement 28 zwangsläufig zu einer Gegendrehung des Drehelements 5 führt. Auch hier können das Drehelement 5 und/oder das ringartige Bedienelement 28 in der Wandung 22, respektive in dem Basiselement 4, in einer Nut 32 geführt sein. Der Vorteil an dieser Anordnung ist, dass die einzige Öffnung 26 kleiner ist als in den anderen Ausführungsformen. Zudem kann die Drehung des Drehelements 5 beliebig lang ausgeführt werden, mehr als 360°, wenn notwendig.

In **Figur 11** ist dasselbe Beispiel mit drei Zahnrädern 33 in drei Öffnungen 26 dargestellt. In beiden Beispielen nach **Figur 10** und **Figur 11** können am Drehelement 5 drei Schnüre 29 befestigt sein, wie in **Figur 10** dargestellt, oder nur eine, wie in **Figur 11** dargestellt. In diesem Fall muss der Drehwinkel 36 entsprechend grösser gewählt werden, damit die Schnur einen Winkel α um die Längsachse 3 von ca. 500-540° überspannt, wenn das Gefäss 2 flüssigkeitsdicht verschlossen ist. Es können auch zwei Schnüre 29 angeordnet werden, was eine bessere Symmetrie ergibt beim Verschlissen des Gefässes 2.

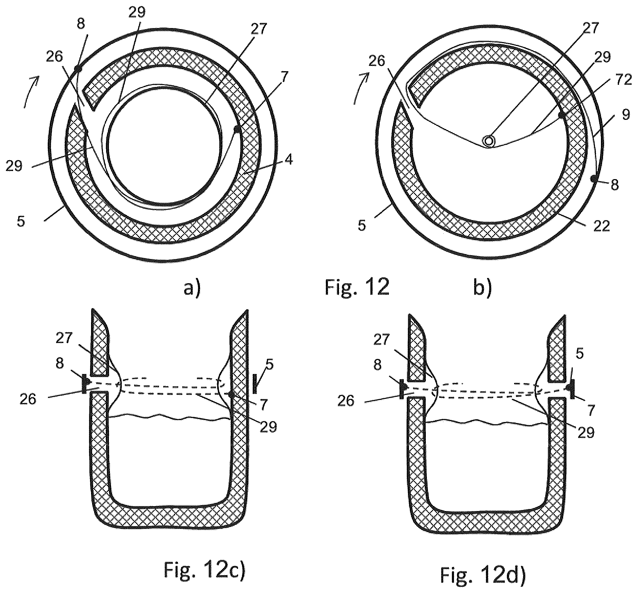

In dem Ausführungsbeispiel nach **Figur 12** ist das Drehelement 5 ringartig ausgestaltet und in einer aussen geführten Nut in der Wandung 22, respektive in dem Basiselement 4, gehalten. Dieses Ausführungsbeispiel weist eine vergleichsweise kleine Öffnungen 26 auf (durch welche keine Stege 30 verlaufen und in denen keine Zahnräder 33 angeordnet sind). Durch die mindestens eine Öffnung 26 verläuft eine Schnur 29, welche die Wirkung vom Drehelement 5 auf den Innenraum 10 überträgt. Ein erstes Ende 7 der mindestens einen Schnur 29 ist dazu jeweils direkt am Basiselement 4 befestigt, und zwar an der Wandung 22 gegenüber der Öffnung 26, wobei die Schnur 29 die Manschette 27 dabei eineinhalbmal umwickelt. Das zweite Ende 8 der einzigen Schnur 29 ist am Drehelement 5 befestigt. Beim Drehen des Drehelements 5 zieht sich die Schnur 29 zusammen und quetscht die Manschette 27 zur Längsachse 3 elastisch zusammen. In diesem Beispiel sind daher nur genau eine Öffnung 26 und eine Schnur 29 vorgesehen. Die Öffnung 26, die nur gerade so gross sein muss, dass die Schnur 29 durch sie hindurchgeführt werden kann.

Bei allen in den in **Figur 7** - **Figur 12** dargestellten Ausführungsformen kann die Anzahl der Schnüre 29 variieren. Je nach Anwendung kann bei allen Ausführungsformen eine zusätzliche Sperrvorrichtung 35 zum Arretieren des Bedienelements und/oder des Drehelements in der geschlossenen Stellung vorgesehen sein, wie z.B. in **Figur 7d** schematisch gezeigt. Jedoch können die Ausführungsformen ebenfalls selbsthemmend schliessbar sein, wie oben beschrieben. Weiterhin können bei allen Ausführungsformen die Öffnungen ebenfalls schräg in Richtung der Längsachse ausgestaltet sein, so dass durch die Verdrehung des Drehelements das Drehelement gegenüber dem Basiselement in Richtung der Längsachse verschiebbar ist. Die Öffnungen, bzw. die durch die Öffnungen erstreckenden Elemente können somit als erste und zweite Führungsmittel, wie oben beschrieben dienen.

### LISTE DER BEZUGSZEICHEN

| | | | |
|---|---|---|---|
| 1 | Verschluss | 20 | Verdickung |
| 2 | Gefäss | 21 | Aussparung |
| 3 | Längsachse | 22 | Wandung |
| 4 | Basiselement | 23 | Boden |
| 5 | Drehelement | 24 | Füllraum |
| 6 | Membran | 25 | Innenraum |
| 7 | Erstes Ende | 26 | Öffnung |
| 8 | Zweites Ende | 27 | Manschette |
| 9 | Erste Durchgangsöffnung | 28 | Bedienelement |
| 10 | Zweite Durchgangsöffnung | 29 | Schnur |
| 11 | Verschlussöffnung | 30 | Stege |
| 12 | Erste Führungsmittel | 31 | Verbindungsbereiche |
| 13 | Zweite Führungsmittel | 32 | Nut |
| 14 | Anschlag | 33 | Zahnrad |
| 15 | Mundstück | 34 | Verzahnungen |
| 16 | Erster Pressring | 35 | Sperrvorrichtung |
| 17 | Zweiter Pressring | 36 | Drehwinkel |
| 18 | Membranzwischenraum | 37 | Rand |
| 19 | Lüftungskanal | | |

## Patentansprüche

1. Verschluss (1) für ein Gefäss (2), umfassend
a. ein sich um eine Längsachse (3) erstreckendes ringartiges Basiselement (4) mit einer ersten Durchgangsöffnung (9),
b. ein mit dem Basiselement (4) wirkverbundenes und zu diesem um die Längsachse (3) verdrehbares ringartiges Drehelement (5) mit einer zweiten Durchgangsöffnung (10), und
c. mindestens ein Schliesselement (6) mit einem ersten Ende (7) und einem zweiten Ende (8), wobei
i. das mindestens eine Schliesselement (6) mit dem ersten Ende (7) mit dem Basiselement (4) und mit dem zweiten Ende (8) mit dem Drehelement (5) wirkverbunden ist, und wobei
ii. eine von dem mindestens einem Schliesselement (6) definierte Verschlussöffnung (11) durch eine Verschiebung des zweiten Endes (8) in Relation zu dem ersten Ende (7) radial zusammenziehbar ist, und wobei
iii. ein von dem ersten Ende (7) und dem zweiten Ende (8) des Schliesselementes (6) begrenzter bewegbarer Bereich des Schliesselementes (6) innerhalb der ersten und/oder der zweiten Durchgangsöffnung (9, 10) angeordnet ist, und wobei
iv. das Schliesselement (6) eine Membran ist, welche durch eine Drehbewegung des Drehelements (5) verdrillbar ist,
**dadurch gekennzeichnet, dass**
in einem verschlossenen Zustand der Verschlussöffnung (11) das Drehelement (5) selbsthemmend gegen das Basiselement (4) gehalten ist und
das Drehelement (5) gegenüber dem Basiselement (4) in Richtung der Längsachse (3) verschiebbar ist, wobei das Drehelement (5) erste Führungsmittel (12) und/oder das Basiselement (4) zweite Führungsmittel (13) zum Führen des Drehelementes (5) in Richtung der Längsachse (3) aufweisen.

2. Verschluss (1) gemäss Patentanspruch 1, **dadurch gekennzeichnet, dass** der Verschluss (1) mindestens einen Anschlag (14) für das zweite Führungsmittel (13) in Richtung der Längsachse (3) aufweist.

3. Verschluss (1) gemäss Patentanspruch 2, **dadurch gekennzeichnet, dass** das zweite Führungsmittel (13) an dem mindestens einem Anschlag (14) verklemmbar ist.

4. Verschluss (1) gemäss Patentanspruch 1, **dadurch gekennzeichnet, dass** in einem verschlossenen Zustand der Verschlussöffnung (11) das Drehelement (5) mindestens 180° gegen das Basiselement (4) verdreht ist.

5. Verschluss (1) gemäss einem der vorangehenden Patentansprüche, **dadurch gekennzeichnet, dass** die Membran (6) auf mindestens einer Seite eine Anti-Haft Beschichtung aufweist.

6. Verschluss (1) gemäss einem der vorangehenden Patentansprüche, **dadurch gekennzeichnet, dass** die Membran (6) kraft und/oder formschlüssig mit dem Basiselement (4) und/oder dem Drehelement (5) verbunden ist.

7. Verschluss (1) gemäss Patentanspruch 6, **dadurch gekennzeichnet, dass** mindestens ein Pressring (16, 17) zur Fixierung der Membran (6) vorhanden ist.

8. Verschluss (1) gemäss einem der vorangehenden Patentansprüche, **dadurch gekennzeichnet, dass** die Membran (6) in dem geöffneten Zustand des Verschlusses (1) in Richtung der Längsachse (3) vorgespannt gehalten ist.

9. Verschluss (1) gemäss einem der vorangehenden Patentansprüche, **dadurch gekennzeichnet, dass** der Verschluss (1) mindestens einen Lüftungskanal (19) für einen Druckausgleich in einem Membranzwischenraum (18) aufweist.

10. Verschluss (1) gemäss Patentanspruch 9, **dadurch gekennzeichnet, dass** die ersten und/oder die zweiten Führungsmittel (12,13) über den Umfang von dem mindestens einem Lüftungskanal (19) unterbrochen werden.

11. Verschluss (1) gemäss einem der vorangehenden Patentansprüche, **dadurch gekennzeichnet, dass** der Verschluss (1) ein Mundstück (15) umfasst, welches mit dem Drehelement (5) oder dem Basiselement (4) wirkverbunden ist.

12. Gefäss (2) mit einem Verschluss (1) gemäss einem der vorangehenden Patentansprüche 1 bis 11.

13. Gefäss (2) gemäss Patentanspruch 12, **dadurch gekennzeichnet, dass** das Basiselement (4) integral mit dem Gefäss (2) verbunden ist.

## Claims

1. Closure (1) for a container (2), comprising
a. an annular base element (4) extending around a longitudinal axis (3) with a first through-opening (9),
b. an annular rotating element (5) operatively connected to the base element (4) and rotatable relative to the latter about the longitudinal axis (3) with a second through-opening (10), and
c. at least one closing element (6) with a first end (7) and a second end (8), wherein
i. the at least one closing element (6) is operatively connected with its first end (7) to the base element (4) and with its second end (8) to the rotating element (5), and wherein
ii. a closure opening (11) defined by the at least one closing element (6) can be radially contracted by a displacement of the second end (8) in relation to the first end (7), and wherein
iii. a movable region of the closing element (6) bounded by the first end (7) and the second end (8) of the closing element (6) is arranged within the first and/or the second passage opening (9, 10), and wherein
iv. the closing element (6) is a membrane which can be twisted by a rotary movement of the rotating element (5),
**characterized in that**
in a closed state of the closure opening (11), the rotating element (5) is held in a self-locking manner against the base element (4) and
the rotating element (5) can be displaced relative to the base element (4) in the direction of the longitudinal axis (3), wherein the rotating element (5) has first guide means (12) and/or the base element (4) has second guide means (13) for guiding the rotating element (5) in the direction of the longitudinal axis (3).

2. Closure (1) according to patent claim 1, **characterized in that** the closure (1) has at least one stop (14) for the second guide means (13) in the direction of the longitudinal axis (3).

3. Closure (1) according to claim 2, **characterized in that** the second guide means (13) can be clamped to the at least one stop (14).

4. Closure (1) according to claim 1, **characterized in that,** when the closure opening (11) is in a closed state, the rotating element (5) is rotated at least 180° relative to the base element (4).

5. Closure (1) according to one of the preceding patent claims, **characterized in that** the membrane (6) has an anti-adhesive coating on at least one side.

6. Closure (1) according to one of the preceding patent claims, **characterized in that** the membrane (6) is connected to the base element (4) and/or the rotating element (5) by force and/or form fit.

7. Closure (1) according to patent claim 6, **characterized in that** at least one pressing ring (16, 17) is provided for fixing the membrane (6).

8. Closure (1) according to one of the preceding patent claims, **characterized in that** the membrane (6) is held prestressed in the direction of the longitudinal axis (3) when the closure (1) is open.

9. Closure (1) according to one of the preceding patent claims, **characterized in that** the closure (1) has at least one ventilation channel (19) for pressure equalization in a membrane interstitial space (18).

10. Closure (1) according to patent claim 9, **characterized in that** the first and/or second guide means (12, 13) are interrupted around the circumference by the at least one ventilation channel (19).

11. Closure (1) according to one of the preceding patent claims, **characterized in that** the closure (1) comprises a mouthpiece (15) which is operatively connected to the rotating element (5) or the base element (4).

12. Container (2) with a closure (1) according to one of the preceding patent claims 1 to 11.

13. Container (2) according to patent claim 12, **characterized in that** the base element (4) is integrally connected to the container (2).

## Revendications

1. Fermeture (1) pour un récipient (2), comprenant
a. un élément de base (4) de type anneau s'étendant autour d'un axe longitudinal (3) et comportant une première ouverture de passage (9),
b. un élément rotatif (5) de type anneau relié de manière fonctionnelle à l'élément de base (4) et pouvant tourner par rapport à celui-ci autour de l'axe longitudinal (3), et comportant une deuxième ouverture de passage (10), et
c. au moins un élément de fermeture (6) avec une première extrémité (7) et une deuxième extrémité (8), dans lequel
i. le au moins un élément de fermeture (6) est relié de manière fonctionnelle par sa première extrémité (7) à l'élément de base (4) et par sa deuxième extrémité (8) à l'élément rotatif (5), et dans lequel
ii. une ouverture de fermeture (11) définie par le au moins un élément de fermeture (6) peut être rétractée radialement par un déplacement de la deuxième extrémité (8) par rapport à la première extrémité (7), et dans lequel
iii. une zone mobile de l'élément de fermeture (6), délimitée par la première extrémité (7) et la deuxième extrémité (8) de l'élément de fermeture (6), est disposée à l'intérieur de la première et/ou de la deuxième ouverture de passage (9, 10), et dans lequel
iv. l'élément de fermeture (6) est une membrane qui peut être tordue par un mouvement de rotation de l'élément rotatif (5),
**caractérisé en ce que,**
dans un état fermé de l'ouverture de fermeture (11), l'élément rotatif (5) est maintenu de manière autobloquante contre l'élément de base (4) et
l'élément rotatif (5) peut être déplacé par rapport à l'élément de base (4) dans la direction de l'axe longitudinal (3), l'élément rotatif (5) comportant des premiers moyens de guidage (12) et/ou l'élément de base (4) comportant des seconds moyens de guidage (13) pour guider l'élément rotatif (5) dans la direction de l'axe longitudinal (3).

2. Fermeture (1) selon la revendication 1, **caractérisée en ce que** la fermeture (1) comporte au moins une butée (14) pour le deuxième moyen de guidage (13) dans la direction de l'axe longitudinal (3).

3. Fermeture (1) selon la revendication 2, **caractérisée en ce que** le deuxième moyen de guidage (13) peut être bloqué sur la au moins une butée (14).

4. Fermeture (1) selon la revendication 1, **caractérisée en ce que,** lorsque l'ouverture de fermeture (11) est fermée, l'élément rotatif (5) est tourné d'au moins 180° par rapport à l'élément de base (4).

5. Fermeture (1) selon l'une des revendications précédentes, **caractérisée en ce que** la membrane (6) présente un revêtement antiadhésif sur au moins un côté.

6. Fermeture (1) selon l'une des revendications précédentes, **caractérisée en ce que** la membrane (6) est reliée par adhérence et/ou par complémentarité de forme à l'élément de base (4) et/ou à l'élément rotatif (5).

7. Fermeture (1) selon la revendication 6, **caractérisée en ce qu'**au moins une bague de pression (16, 17) est prévue pour fixer la membrane (6).

8. Fermeture (1) selon l'une des revendications précédentes, **caractérisée en ce que** la membrane (6) est maintenue précontrainte dans la direction de l'axe longitudinal (3) lorsque la fermeture (1) est ouverte.

9. Fermeture (1) selon l'une des revendications précédentes, **caractérisée en ce que** la fermeture (1) comporte au moins un canal d'aération (19) pour l'équilibrage de la pression dans un espace intermédiaire (18) de la membrane.

10. Fermeture (1) selon la revendication 9, **caractérisée en ce que** les premiers et/ou les seconds moyens de guidage (12, 13) sont interrompus sur le pourtour par le au moins un canal d'aération (19).

11. Fermeture (1) selon l'une des revendications précédentes, **caractérisée en ce que** la fermeture (1) comprend un embout (15) qui est relié de manière fonctionnelle à l'élément rotatif (5) ou à l'élément de base (4).

12. Récipient (2) avec un bouchon (1) selon l'une des revendications 1 à 11 précédentes.

13. Récipient (2) selon la revendication 12, **caractérisé en ce que** l'élément de base (4) est relié de manière intégrale au récipient (2).
